# EUROPÄISCHE PATENTSCHRIFT

(11) **EP 3 170 639 B1**
(45) Veröffentlichungstag und Bekanntmachung des Hinweises auf die Patenterteilung: **07.07.2021**
(21) Anmeldenummer: 16196912.6
(22) Anmeldetag: 02.11.2016
(51) Int. Cl.: B29C 31/00, B29C 45/17

(54) **VERFAHREN ZUR STEUERUNG DER GESCHWINDIGKEIT UND DER POSITIONIERUNG EINES WERKZEUGWECHSELWAGENS SOWIE ARBEITSSTATION FÜR EINE MIT AUSWECHSELBAREN WERKZEUGEN BESTÜCKTE MASCHINE**
METHOD FOR CONTROLLING THE SPEED AND THE POSITIONING OF A TOOL CHANGING TRUCK, AND WORK STATION FOR A MACHINE EQUIPPED WITH INTERCHANGEABLE TOOLS
PROCÉDÉ DE RÉGULATION DE LA VITESSE ET DU POSITIONNEMENT D'UN CHARIOT DE CHANGEMENT D'OUTIL ET STATION DE TRAVAIL POUR UNE MACHINE ÉQUIPÉE D'OUTILS INTERCHANGEABLES

(30) Priorität: 17.11.2015 DE 202015106216 U
(43) Veröffentlichungstag der Anmeldung: 24.05.2017
(73) Patentinhaber: Konrad, Hellmut, 42653 Solingen (DE); Konrad, Ralf, 42653 Solingen (DE)
(72) Erfinder: Konrad, Hellmut, 42653 Solingen (DE); Konrad, Ralf, 42653 Solingen (DE)
(74) Vertreter: Patentanwälte Vomberg & Schart

(56) Entgegenhaltungen:
- DE-U1-202005 019 797
- DE-U1-202008 004 609
- US-A1- 2011 193 253

## Beschreibung

Die Erfindung betrifft ein Verfahren zur Steuerung der Geschwindigkeit und der Positionierung eines auf Schienen geführten und mit Werkzeugen beladenen Werkzeugwechselwagens.

Die Erfindung betrifft ferner eine Arbeitsstation für eine mit auswechselbaren Werkzeugen bestückte Maschine, mit einem zum An- und Abtransport von Werkzeugen beladenen Werkzeugwechselwagen, der entlang eines Fahrweges führbar ist und dessen Position, insbesondere beim Aufnehmen oder Abgeben von Werkzeugen mittels eines mit einer Steuereinrichtung verbundenen Sensors detektierbar ist.

Die US 2011/0193253 A1 betrifft ein Verfahren zur Steuerung von selbstfahrenden Wagen für Gießformen, von denen jeder eine Wagenstandortanzeige enthält, die den Ort des Wagens bestimmt, der im wesentlichen kontinuierlich an eine Wagensteuerungseinrichtung übertragen und dann an eine Primärsteuerung weitergeleitet wird. Von dort aus werden Positionsanweisungen, z.B. für eine Polymereinfüllstation an jede Wagensteuerung weitergeleitet, die dem jeweiligen Antriebsystem jedes Wagens entsprechende Anweisungen zur Betriebsposition bereitstellt. Die Wagenstandortanzeige, die einen Prozessor mit einem Triangulationsalgorithmus enthält, interagiert mit zwei oder mehreren getrennten und stationären Positionsanzeigen, z.B. mittels reflektiertem Laserlicht und bestimmt dadurch die Position des Wagens mittels Triangulation. Über einen Drahtanschluss werden von der Wagensteuerung Positionsanweisungen an den Antriebsmotor des Wagens übertragen.

In der EP 0 164 062 B1 wird eine Vorrichtung zum Wechseln einer Form in einer horizontalen Kunststoffspritzgießmaschine beschrieben, bei der die Vorrichtung zum Formenwechsel mit einem Schlitten für den Transport der Form ausgestattet ist, der durch eine Motoreinrichtung auf einer Führung angetrieben wird und wobei die Spritzgießformen zwischen einem Paar von gewichttragenden Einspannplatten angeordnet sind. Zum Formenwechsel ist es erforderlich, die Form von den in der Einspritzgießmaschine montierten Einspannplatten zu lösen und die neue Form zwischen den Einspannplatten zu befestigen, wozu eine vorherige genaue Positionierung der neuen Form erforderlich ist.

Um den komplizierten und zeitaufwendigen Arbeitsgang des Formenwechsels zu verkürzen und zu vereinfachen wird in der EP 0 164 062 B1 vorgeschlagen, dass die Einspannplatten mindestens von der unten liegenden Oberfläche der Form vorstehen, dass die Spritzgießmaschine mindestens eine Basis aufweist, auf der eine feststehende Platte und eine bewegliche Platte gelagert sind, wobei zwischen den Platten die Form eingesetzt oder heraus bewegt werden soll. Ferner soll der Schlitten ein Paar von Arbeitsstationen aufweisen und längs der Spritzgießmaschine angeordnet und für eine Bewegung parallel zur Bewegung der beweglichen Platte gelagert sein. Die Vorrichtung soll Rolleneinrichtungen für die Platten aufweisen, die längs dem unteren Abschnitt jeder Platte zur Lagerung der dazu gehörigen Einspannplatte angeordnet sind. Die Beladung der Maschine erfolgt über wahlweise ein Zahnstangensystem oder über ein angetriebenes Rollensystem.

Auf dem Wechselwagen wird je Position ein Rollensystem mehrerer Rollen mit einem Motor über ein Kettensystem angetrieben. Das gleiche wird in der Maschine verwendet. Die feste Seite ist mit Führungsleisten versehen, um das Werkzeug in Spur zu halten. Die bewegliche Seite erhält nicht angetriebene Rollen.

Zahnstangeneinrichtungen sind längs der unteren Oberfläche mindestens einer der Einspannplatten angeordnet. Ferner ist ein Maschinenmotor mit einem Antriebritzel für den Eingriff mit der Zahnstangeneinrichtung gelagert, wobei Schlittenrolleneinrichtungen auf dem Schlitten zur Aufnahme und zum rollenden Eingriff mit den Einspannplatten vorgesehen sind. Die Platten und die Schlittenrolleinrichtungen sind derart angeordnet, dass die Einspannplatten und die Form seitlich der Maschine beweglich sind und dass Schlittenmotor mit Antriebszahnrad an dem Schlitten innerhalb der Schlittenrollen gelagert ist und mit den Zahnstangeneinrichtungen an der Einspannplatte mit seinem Zahnrad in Eingriff steht, so dass die Zahnstangeneinrichtung während des Formenwechsels mit dem Antriebszahnrad des Maschinenmotors und einem der Antriebszahnräder des Schlittenmotors in Reihe in Eingriff gelangt und die Einspannplatte und die Form seitlich zwischen der Maschine und dem Schlitten angetrieben wird. Als Antriebe werden Flügelradmotoren verwendet. Um die zum An- und Abtransport der Formteile benutzten Werkzeugwechselwagen entlang der vorgesehenen Fahrwege exakt führen zu können, sind Näherungsschalter vorgesehen, die bei mechanischer Auslösung die Steuerung der Flügelradmotoren bewirken. Näherungsschalter besitzen jedoch den Nachteil, dass der Werkzeugwechselwagen nur sehr langsam bewegt werden kann. Zudem sind Positionsungenauigkeiten nicht immer zu vermeiden, so dass bei einer Fehlpositionierung des Werkzeugwechselwagens der Werkzeugwechsel schlimmstenfalls verhindert, zumindest dadurch erschwert wird, dass der Werkzeugwechselwagen neu positioniert werden muss.

Lange Umrüstzeiten haben unmittelbaren Einfluss auf die Wirtschaftlichkeit des Fertigungsvorgangs und sollten daher so kurz wie möglich sein.

Es ist Aufgabe der vorliegenden Erfindung, ein Verfahren und eine Arbeitsstation der eingangs genannten Art mit verkürzten Werkzeugwechselzeiten zu schaffen.

Diese Aufgabe wird durch ein Verfahren nach Anspruch 1 sowie eine Arbeitsstation nach Anspruch 2 gelöst.

Bei dem erfindungsgemäßen Verfahren dient ein Laser sowohl zur Bestimmung der Entfernung als auch zur Steuerung der Geschwindigkeit des Werkzeugwechselwagens.

Die Erfindung gemäß Arbeitsstation ist dadurch gekennzeichnet, dass der Sensor ein Laser ist, der sowohl als Entfernungsmesser als auch zur Messung der Geschwindigkeit des Werkzeugwechselwagens dient.

Ein Laser ermöglicht eine berührungslose Distanz- und Geschwindigkeitsmessung, weshalb der Sensor verschleißfrei arbeitet. Solange der Werkzeugwechselwagen in Bereichen bewegt wird, die von den Positionen entfernt sind, bei denen die Bewegungsrichtung des Werkzeugwechselwagens geändert oder der Werkzeugwechselwagen zum Werkzeugwechsel exakt positioniert werden muss, können maximale Geschwindigkeiten gewählt werden, die zu einer erheblichen Zeitersparnis führen. Erst kurz vor Erreichen der Orte einer Bewegungsrichtungsänderung oder der Werkzeugwechselposition wird der Werkzeugwechselwagen abgebremst. Zudem lässt ein Laser-Sensor eine exakte Distanzmessung und damit eine exakte Positionierung des Werkzeugwechselwagens verwirklichen.

Vorzugsweise wird in der erfindungsgemäßen Arbeitsstation ein Laser verwendet, der zur Aussendung kurzer Impulse ausgebildet ist, wobei ein Empfänger zur Detektion der von dem Werkzeugwechselwagen reflektierten Impulse vorgesehen ist. Ein solches auch als Pulse-Ranging-Technology bekanntes Verfahren arbeitet mit hochenergiereichen Impulsfolgen, von denen z. B. 200.000 Impulse/Sekunde ausgesendet und vom Empfänger nach der Reflexion am Werkzeugwechselwagen wieder empfangen werden. Aus der Pulsfolge lässt sich somit zu jedem Zeitpunkt die genaue Lage des Werkzeugwechselwagens als auch die Distanz zum Werkzeugwechselort bestimmen. Dieses Verfahren bzw. solche Vorrichtungen aus einer Sender/Empfängereinheit arbeiten höchst genau, störungsfest und fehlerfrei.

In einem praktischen Anwendungsbeispiel wurden verwendete Werkzeugwechselwagen, die entlang von sich unter einem rechten Winkel kreuzenden Führungsbahnen bewegbar sind, mit Reflektoren ausgestattet. Die Werkzeugwechselwagen mussten zum Zu- und Abfördern von schweren Werkzeugen sowohl positionsgenau auf die Werkzeugwechselstation bewegt und zum Werkzeugwechsel dort verankert werden als auch am Kreuzungspunkt zu einer Bewegungsänderung umgesteuert werden.

Als Steuergerät wurde eine Sende-Empfangseinrichtung verwendet, in der ein Laser angeordnet war, der pro Sekunde eine Vielzahl von hochenergetischen Impulsen ausgesendet hat. Ferner war in der Steuereinrichtung ein Empfänger enthalten, der die vom Werkzeugwechselwagen reflektierten Signale aufnahm und an eine Steuereinrichtung für den Werkzeugwechselwagen weitergab. Um den Laserstrahl in unterschiedlichen Richtungen entlang des Fahrweges für die Werkzeugwechselwagen benutzen zu können, wurde zusätzlich ein Umlenkprisma in den Strahlengang geschoben.

Bei Verwendung der beschriebenen Anordnung konnten bereits auf kurzen Distanzen, auf denen die Werkzeugwechselwagen bewegt werden mussten, Zeiten von frei, so dass Positionsungenauigkeiten der Werkzeugwechselwagen vollständig eliminiert werden konnten.

Ein Ausführungsbeispiel der Erfindung wird im Folgenden anhand der Zeichnungen erläutert. Es zeigen:
- Fig. 1: eine Draufsicht auf eine Fahrschiene mit einem Werkzeugwechselwagen, der entlang einer Reihe von Spritzgießmaschinen verfahrbar ist und
- Fig. 2: eine Prinzipdarstellung der Funktion der Orts- und Geschwindigkeitsbestimmung eines Werkzeugwechselwagens.

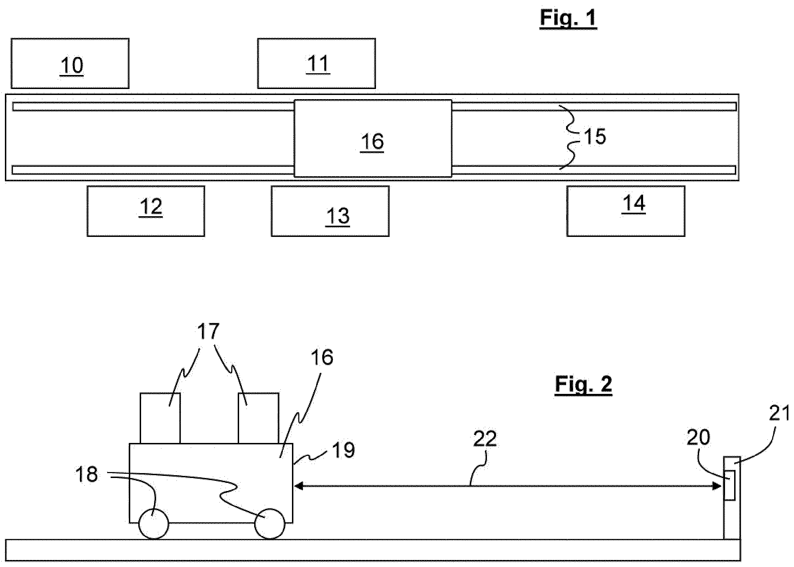

Aus Fig. 1 ist zu erkennen, dass in einer ersten Reihe zwei Spritzgießmaschinen 10 und 11 und in einer parallel dazu angeordneten Reihe Spritzgießmaschinen 12, 13 und 14 aufgereiht sind. Zwischen diesen beiden Reihen befindet sich eine Fahrschiene 15, entlang der ein Werkzeugwechselwagen 16 verfahrbar ist. Der Werkzeugwechselwagen ist, wie aus Fig. 2 zu erkennen, mit Spritzgießwerkzeugen 17 beladen, die beim Werkzeugwechsel an eine Spritzgießmaschine transportiert werden müssen. Zum Werkzeugwechsel wird vorzugsweise ein Roboter verwendet, der die auszuwechselnden Spritzgießwerkzeuge jeweils an der Spritzgießmaschine löst und auf dem Werkzeugwechselwagen ablegt. Die "neuen" Spritzgießwerkzeuge werden anschließend von dem Werkzeugwechselwagen entnommen und zu der Spritzgießmaschine geführt, wo sie entsprechend montiert werden, beispielsweise mittels Betätigung einer Schnellspannvorrichtung. Der Werkzeugwechselwagen 16 muss anschließend die nicht benötigten Spritzgießwerkzeuge wieder an einen Lagerort zurückbringen und ggf. neue Spritzgießwerkzeuge aufnehmen, die zu einer anderen Spritzgießmaschine geführt werden müssen.

In Fig. 1 ist die Fahrschiene linear dargestellt, es sind jedoch auch Fahrwege auf gekrümmten Bahnen oder über sich kreuzende Fahrschienen denkbar. In Fig. 2 ist der Werkzeugwechselwagen mit einem Radsatz 18 ausgestattet. An der Frontseite 19 sind Reflektoren angeordnet, die von einem Laser 20 an einem Festanschlag 21 ausgesandten Laserstrahlen 22 reflektieren. An diesem Festanschlag 21 ist auch ein Empfänger angeordnet, der die reflektierten Laserstrahlen 22 detektiert und aus den unterschiedlichen Laufzeiten sowohl über eine nicht im Einzelnen dargestellte aber nach dem Stand der Technik grundsätzlich bekannte Auswerteinheit sowohl die Entfernung des Werkzeugwechselwagens 16 von dem Festanschlag als auch seine momentane relative Geschwindigkeit errechnet. Die Positions- bzw. Ortsbestimmung per Lasermessung ist exakt, so dass Werkzeugwagenfehlstellungen an Spritzgießmaschinen bzw. am Lagerplatz weitgehend ausgeschlossen sind. Nachdem jeweiligen Werkzeugwechsel bzw. nach der Werkzeugaufnahme kann der Werkzeugwechselwagen 16 mit maximaler Geschwindigkeit zum Bestimmungsort gefahren werden. Sowohl die Fahrzeiten des Werkzeugwechselwagens als auch Fehlzeiten in Folge falscher Positionierung des Wechselwagens werden vermieden, so dass insgesamt die Werkzeugwechselgeschwindigkeiten optimiert werden.

## Patentansprüche

1. Verfahren zur Steuerung der Geschwindigkeit und der Positionierung eines auf Schienen geführten und mit Werkzeugen (17) beladenen Werkzeugwechselwagens (16),
**dadurch gekennzeichnet, dass**
ein Laser (20) sowohl die Entfernung des Werkzeugwechselwagens (16) von einem Festanschlag als auch seine momentane relative Geschwindigkeit bestimmt.

2. Arbeitsstation für eine mit auswechselbaren Werkzeugen (17) bestückten Maschine, mit einem zum An- und Abtransport von Werkzeugen beladenen Werkzeugwechselwagen (16), der entlang eines Fahrweges (15) führbar ist und dessen Position, insbesondere beim Aufnehmen oder Abgeben von Werkzeugen (17) mittels eines mit einer Steuereinrichtung verbundenen Sensors detektierbar ist,
**dadurch gekennzeichnet, dass**
der Sensor ein Laser (20) ist, der sowohl die Entfernung des Werkzeugwechselwagens (16) von einem Festanschlag als auch seine momentane relative Geschwindigkeit bestimmt.

3. Arbeitsstation nach Anspruch 2, **dadurch gekennzeichnet, dass** der Laser (20) zur Aussendung von Impulsen ausgebildet ist und dass ein Empfänger zur Detektion der von dem Werkzeugwechselwagen (16) reflektierten Impulse vorgesehen ist.

## Claims

1. Method for controlling the speed and the positioning of a tool change carriage (16) guided on rails and loaded with tools (17), **characterized in that** a laser (20) determines both the distance of the tool change carriage (16) from a fixed stop and its current relative velocity.

2. Work station for a machine equipped with interchangeable tools (17), with a tool change carriage (16) loaded with tools for transport and removal, the tool change carriage is guidable along a path way (15) and its position is detectable, by means of a sensor connected to a control unit, in particular when taking up or dispensing tools (17) **characterized in that** the sensor is a laser (20) which determines both the distance of the tool change carriage (16) from a fixed stop and its current relative velocity.

3. Work station according to claim 2, **characterized in that** the laser (20) is designed for pulse transmitting and that a receiver is provided for detecting the pulses reflected from the tool change carriage (16).

## Revendications

1. Procédé de commande de la vitesse et du positionnement d'un chariot de changement d'outil (16) guidé sur des rails et chargé d'outils (17), **caractérisé par le fait qu'**un laser (20) détermine aussi bien la distance séparant le chariot de changement d'outil (16) d'une butée fixe que la vitesse relative momentanée de celui-ci.

2. Poste de travail pour une machine équipée d'outils (17) interchangeables, comprenant un chariot de changement d'outil (16) qui est chargé pour amener et évacuer des outils et peut être guidé le long d'un chemin de déplacement (15) et dont la position, en particulier lorsqu'il prend ou rend des outils (17), peut être détectée au moyen d'un capteur qui est connecté à un dispositif de commande, **caractérisé par le fait que** le capteur est un laser (20) qui détermine aussi bien la distance séparant le chariot de changement d'outil (16) d'une butée fixe que la vitesse relative momentanée de celui-ci.

3. Poste de travail selon la revendication 2, **caractérisé par le fait que** le laser (20) est conçu pour émettre des impulsions et qu'un récepteur est prévu pour détecter les impulsions réfléchies par le chariot de changement d'outil (16).
